# EUROPEAN PATENT APPLICATION

(11) **EP 4 797 466 A1**
(43) Date of publication of application: **26.08.2026**
(21) Application number: 25176887.5
(22) Date of filing: 16.05.2025
(51) Int. Cl.: H01R 35/04, H01R 13/66, H01R 24/68, H01R 31/06, H02J 7/00

(54) **FOLDABLE CHARGER**

(30) Priority: 19.02.2025 DE 202025100900 U
(71) Applicant: Yang, Chien-Yi, Taipei City (TW)
(72) Inventor: Yang, Chien-Yi, Taipei City (TW)
(74) Representative: Cabinet Chaillot

(57) **Abstract**

A foldable charger includes a charger body (1) and a plug assembly (2). The charger body (1) has a housing (10), a circuit board assembly (11), a bracket (12), and a pair of circuit board conductive spring plates (13). The housing (10) has a first side (101) and an assembling part (102). The plug assembly (2) is installed to the assembling part (102), and defines a status parallel or perpendicular to the first side (101) in correspondence with the pivoting of the bracket (12). The plug assembly (2) includes an inner cover (20), a pair of conductive adapter plates (21), a pair of conductive fasteners (22), and a plug structure (23). The plug structure (23) includes an outer cover (231) and a plug-in part (232). This design realizes a lightweight, thin, short, and compact features with a stable conductive connection and overcomes the issue of poor contact without the need to bury the plug assembly (2) in the charger body (1).

## Description

### BACKGROUND OF THE DISCLOSURE

### Technical Field

The present disclosure relates to chargers, and particularly relates to a foldable charger with a novel structural design that overcomes the issue of increasing the volume of the charger due to the folding design of the plug and the need of reserving storage space, so that the charger can be folded to store the plug and to achieve the lightweight and compact effects, while giving a stable conductive contact performance of the foldable charger.

### Description of the Related Art

As electronic equipment is becoming increasingly popular, chargers are introduced. The initial type is a simple current conversion device used to convert alternating current into direct current for the use of the electronic equipment, and its structure is simple and monofunctional. With the surge in demand for portable devices, the technology of chargers is further refined and developed into a variety of types, such as direct plug-in chargers with a design of directly connecting the socket; desktop chargers equipped with multiple output ports for charging multiple devices simultaneously; wireless chargers using electromagnetic induction technology to provide a more convenient way of charging; and so on. Foldable charger is another type that offers advantages in terms of portability and space optimization, as the plug can be folded and stored, thus making the charger lighter and more compact when not in use. However, the existing foldable chargers still have a lot of room for improvement in terms of structure and performance.

The existing foldable charger usually comes with a design where the plug is buried in the main body when it is folded back, so the foldable charger requires sufficient space in the body. In order to satisfy this design requirement, the size of the main body is forced to increase, resulting in a too-large overall volume and making it difficult to truly realize the light, thin, short and compact design, especially in applications with high portability requirements. In addition, many foldable chargers have deficiencies in the design of the conductive mechanism between the plug and the internal circuit components. For example, the conductive structure is often poorly contacted, resulting in unstable conduction or reduced conductive efficiency, and may even lead to safety issues such as current interruption or component damage. These problems not only reduce user satisfaction, but also have a negative impact on the reliability and life of the product.

In view of the aforementioned drawbacks of the related art, the discloser of the present disclosure with years of experience in the related industry, conceptualizes and proposes a foldable charger with a novel structural design, so as to effectively improve the structural design and the performance of the existing chargers.

### SUMMARY OF THE DISCLOSURE

It is a primary objective of the present disclosure to provide a foldable charger that uses a novel structural design to achieve the function of folding and storing the plug while maintaining the advantages of light, thin, short and compact design, and achieving higher portability and practicality. In addition, it can also ensure stable conductive contact during use, improving overall performance and user experience.

To achieve the aforementioned objective, the present disclosure discloses a foldable charger, including: a charger body. The charger body comprises: a housing having a first side and an assembling part, the assembling part being arranged on the first side and having a mounting hole communicating with an inside of the housing; a circuit board assembly, installed in the housing, and having at least one charging port exposed from a surface of the housing; a bracket, pivotally installed to the assembling part, and having an end disposed in the housing and another end passing through the mounting hole and protruding out from the assembling part, the bracket capable of being pivoted relative to the assembling part to be parallel to the first side or perpendicular to the first side, the end having a pair of first pins, and the other end having a pair of second pins; and a pair of circuit board conductive spring plates, assembled to the circuit board assembly, and provided for contacting the pair of first pins of the bracket for electrical conduction when the bracket pivots to be perpendicular to the first side; and a plug assembly, assembled to the assembling part, and defining a status of the plug assembly being parallel to the first side or perpendicular to the first side in response to the pivoting of the bracket. The plug assembly comprises: an inner cover, covering the assembling part and having a first slot; a pair of conductive adapter plates, symmetrically installed to a side of the inner cover, and respectively having a clamping part; a pair of conductive fasteners, arranged to be corresponding to the pair of conductive adapter plates, an end of the pair of conductive fasteners passing to the pair of conductive adapter plates and the inner cover and fixed to the pair of second pins, and another end of the pair of conductive fasteners abutting against the pair of conductive adapter plates; and a plug structure, comprising an outer cover and a plug-in part, the outer cover covering the inner cover and having a second slot corresponding to the first slot, the plug-in part passing from the inside of the outer cover to the outside of the outer cover, and an end of the plug-in part, located in the outer cover, having a pair of third pins, and the pair of third pins passing through the pair of clamping parts and being clamped and fixed by the pair of clamping parts. In this way, the function of folding the plug assembly can be realized while keeping the charger body light, thin, short and compact to ensure its advantage of being easy to carry. In addition, the conductive stability can also be improved effectively through the special mechanical design.

Preferably, the foldable charger further includes a shaft spring plate and a cover plate. The bracket has a pair of support bars and a shaft, the pair of support bars are symmetrically arranged, the shaft is arranged between the pair of support bars and perpendicular to the pair of support bars, the shaft has a first concave guide section and a second concave guide section, the first concave guide section is located adjacent to the second concave guide section, the pair of first pins and the pair of second pins are located at two opposite ends of the pair of support bars respectively. The cover plate is assembled to the inside of the housing and disposed on a side of the shaft, the shaft spring plate is installed to the cover plate and disposed between the shaft and the cover plate, and the shaft spring plate has a convex arc section. When the bracket is pivoted to be parallel to the first side, the convex arc section and the first concave guide section abut against each other, and when the bracket is pivoted to be perpendicular to the first side, the convex arc section and the second concave guide section abut against each other. In this way, when a user operates the plug assembly to make it parallel or perpendicular to the first side, the effect of automatic sliding and positioning can be achieved effectively.

Preferably, the cover plate is locked into the housing through a screw to improve the overall stability of the mechanism in the presence of elastic feedback from the shaft spring plate.

Preferably, each clamping part has a pair of clips with a mirrored configuration, and the distance between the pair of clips gradually decreases in a direction towards the inner cover, so that the pair of third pins can achieve a stable and tight clamping effect.

Preferably, the assembling part is provided with at least one rib, the inner cover is provided with at least one positioning hole, and when the plug assembly defines a status perpendicular to the first side in correspondence with the pivoting of the bracket, the rib and the positioning hole are engaged and fixed to each other. In this way, the plug assembly can be securely fixed in a vertical position to the first side in order to avoid displacement of the plug assembly due to contact

Preferably, the pair of conductive fasteners are screws for assembling and fixing the pair of second pins by means of a locking method in order to enhance the structural stability and improve the stability of electrical conduction.

Preferably, the inner side of the outer cover is provided with at least one first assembly portion, the outer side of the inner cover is provided with at least one second assembly portion, the outer cover and the inner cover are assembled and fixed by the first assembly portion and the second assembly portion, and the first assembly portion and the second assembly portion are a groove structure and a bump structure respectively, so as to enhance the overall structural stability of the plug assembly.

Preferably, the foldable charger further includes a telescopic charging cable, and the outer side of the housing is provided with an accommodating slot, the telescopic charging cable is installed in the housing and has an end located inside the housing and electrically coupled to the circuit board assembly and another end located outside the housing and has a charging connector, and is provided for being accommodated in the accommodating slot. In this way, the convenience of use of the foldable charger is improved.

Preferably, the charging connector is of the specification selected from USB-A, Mini USB, Micro USB, USB Type-C, Lighting, or any combination of the above to satisfy various charging requirements of different electronic devices.

Preferably, the charging port is of the specification selected from USB-A, Mini USB, Micro USB, USB Type-C, Lighting or any combination of the above. In this way, the foldable charger has wide compatibility to expand the adaptability and practicality of the charger.

In summary, the foldable charger of the present disclosure has the light, thin, short and compact advantages through a special bending structure and a conductive path design, making it easier to carry and use. In terms of conductive performance, the foldable charger also has excellent stability and reliability, effectively overcoming the defect of unstable conductive state caused by poor contact in existing chargers. Furthermore, the present disclosure also proposes many additional technical features, the details of which and their corresponding effects have already been described above.

### BRIEF DESCRIPTION OF THE DRAWINGS

FIG. 1 is an FIG. 1 is an exploded view of a foldable charger in accordance with a preferred embodiment of the present disclosure;
FIG. 2 is another exploded view of a foldable charger in accordance with a preferred embodiment of the present disclosure;
FIG. 3A is a first cross-sectional view of a foldable charger in accordance with a preferred embodiment of the present disclosure;
FIG. 3B is a second cross-sectional view of a foldable charger in accordance with a preferred embodiment of the present disclosure;
FIG. 4A is a perspective view showing a part of the structure of a foldable charger in accordance with a preferred embodiment of the present disclosure;
FIG. 4B is another perspective view showing a part of the structure of a foldable charger in accordance with a preferred embodiment of the present disclosure;
FIG. 5 is a perspective view showing another implementation mode of a foldable charger in accordance with a preferred embodiment of the present disclosure; and
FIG. 6 is a perspective view showing a further implementation mode of a foldable charger in accordance with a preferred embodiment of the present disclosure.

### DESCRIPTION OF THE PREFERRED EMBODIMENTS

In order to enable those having ordinary skills in the art to clearly understand the technical contents of the present disclosure, the following illustrations are provided. It is noteworthy that the structural scale, proportion, size, shape or application status shown in each of the drawings are only schematic and are intended for the purpose of illustrating the technical characteristics of the present disclosure, and do not represent the actual structural design, as described in the preceding paragraph.

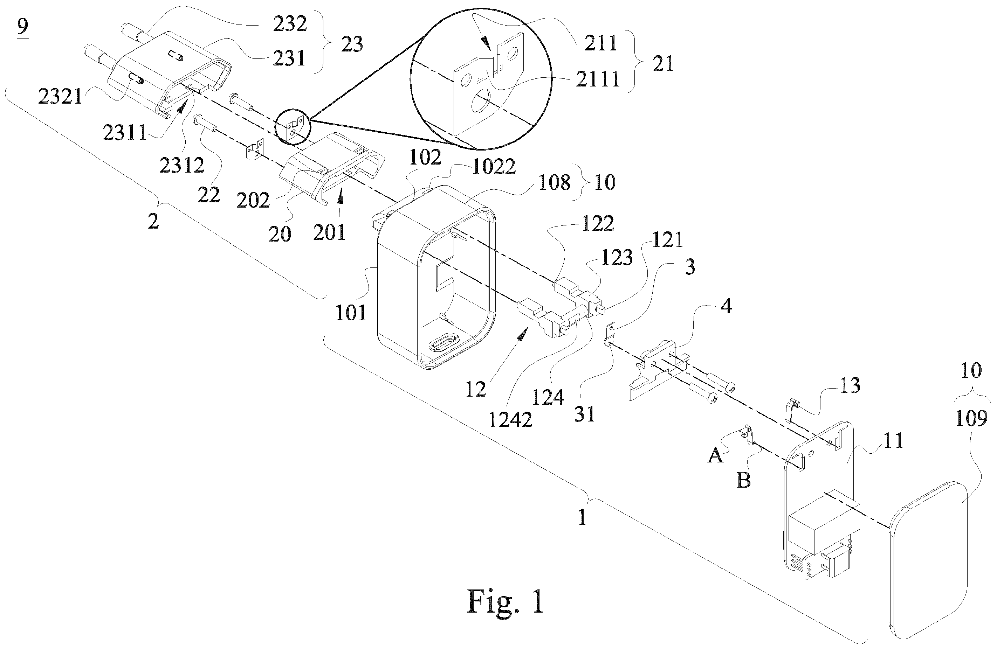

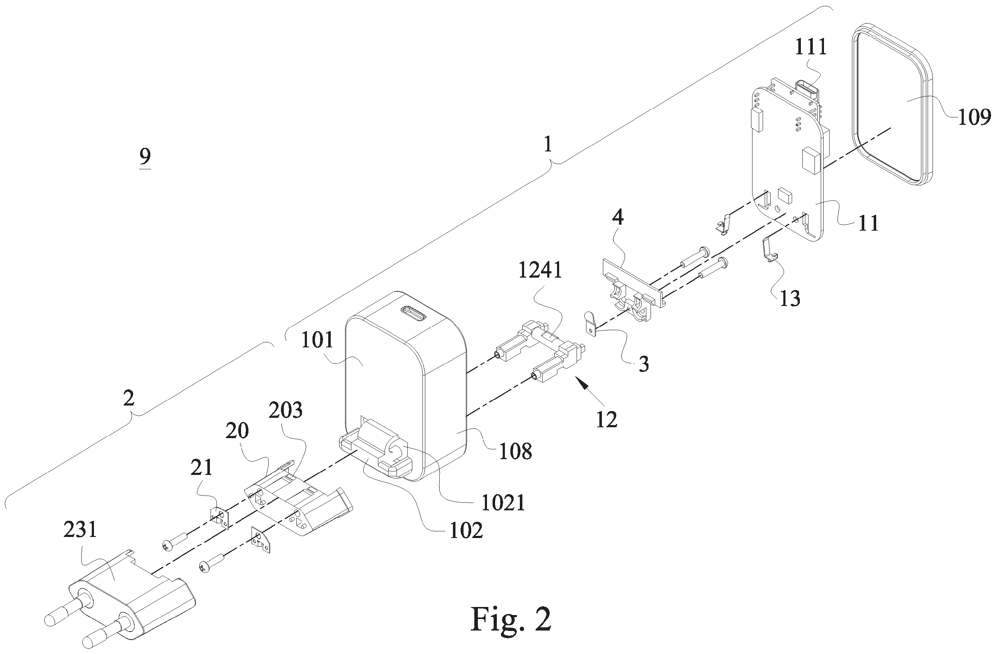

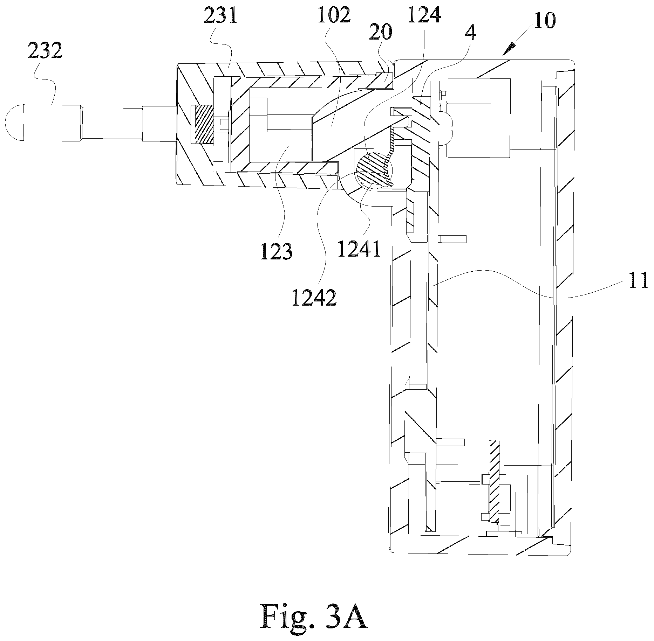

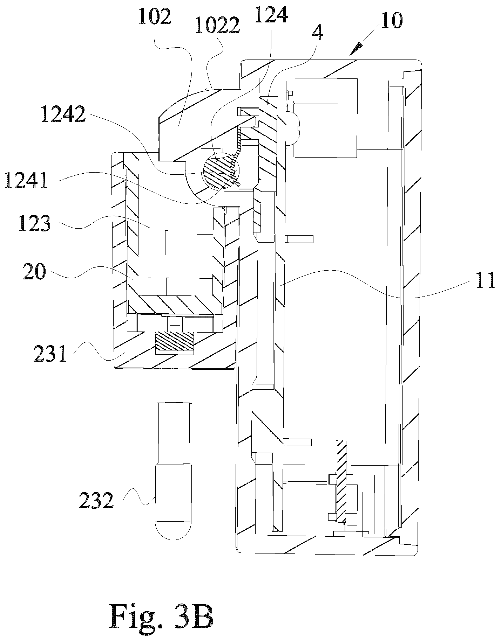

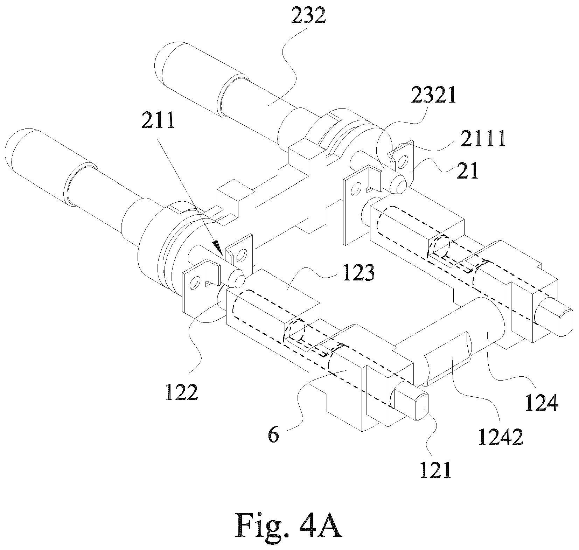

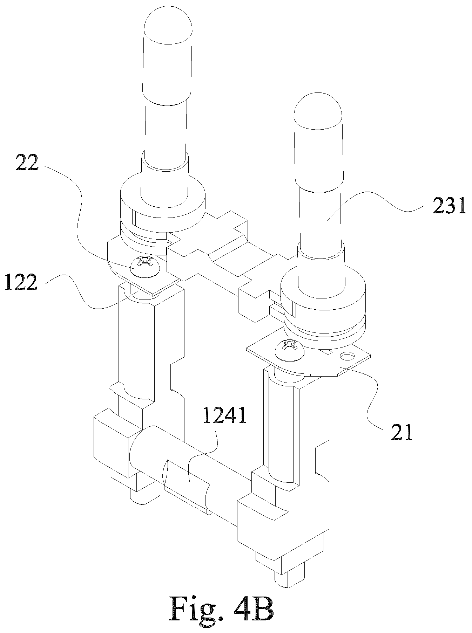

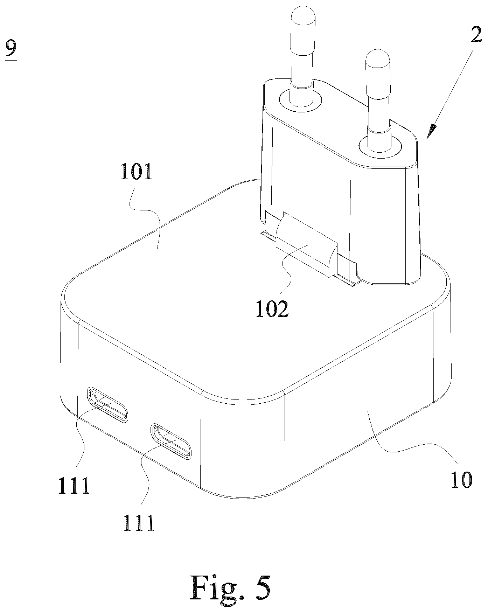

With reference to FIGS. 1 to 5 for the two exploded views and the two cross-sectional views of a foldable charger, and the schematic view showing a part of the foldable charger of another implementation mode in accordance with a preferred embodiment of the present disclosure respectively, the present disclosure discloses a foldable charger 9 including a charger body 1 and a plug assembly 2. The charger body 1 includes a housing 10, a circuit board assembly 11, a bracket 12 and a pair of circuit board conductive spring plates 13. The housing 10 has a first side 101 and an assembling part 102, the assembling part 102 is located on the first side 101 and has a mounting hole 1021 communicating with the inside of the housing 10. Preferably, the housing 10 is a structure with a lower casing 108 and an upper casing 109, the lower casing 108 is in a box shape and has a peripheral side and a lower surface, the first side 101 is the lower surface of the lower casing 108, and the lower casing 108 is primarily used for accommodating various elements, the upper casing 109 is a plate structure provided for covering an opening of the lower casing 108. The circuit board assembly 11 is arranged inside the housing 10 and provided with at least one charging port 111, the charging port 111 is exposed from a surface of the housing 10. In the example above, the housing 10 is a structure with the lower casing 108 and the upper casing 109, the charging port 111 is exposed from a position on the peripheral side of the lower casing 108, but the present disclosure is not limited thereto, and the charging port 111 can also be exposed from the upper casing 109 according the using requirement. The charging port 111 is of a specification selected from USB-A, Mini USB, Micro USB, USB Type-C, Lighting or any combination of the above, and the quantity of charging ports 111 can be one or more, for example, there is one charging port 111 in the embodiment as shown in FIG. 1, and the charging port 111 is of the USB Type-C specification. When there are multiple charging ports 111, each charging port 111 can be of the same specification or a different specification. In the embodiment as shown in FIG. 5, there are two charging ports 111, and both of the charging ports 111 are of the USB Type-C specification, and each charging port 111 is of a different specification, and they will be described in detail below.

The bracket 12 of the charger body 1 is pivoted relative to the assembling part 102, an end of the bracket 12 is located inside the housing 10, another end of the bracket 12 passes through the mounting hole 1021 and protrudes out of the assembling part 102, the bracket 12 can pivot relative to the assembling part 102 into a status parallel to the first side 101 or perpendicular to the first side 101, and the end of the bracket 12, located inside housing 10, has a pair of first pins 121, and the other end of the bracket 12, protruding out of the assembling part 102, has a pair of second pins 122. The bracket 12 is a main structure provided for the pivoting of the plug assembly 2, and more specifically, the bracket 12 is assembled from the inner position of the housing 10. In other words, the bracket 12 is passed from the inside of the housing 10 through the mounting hole 1021 and pivoted to the assembling part 102 to make the bracket 12 to form an end that protrudes out from the assembling part 102, and another end located inside the housing 10. In an implementation mode, the pair of first pins 121 and the pair of second pins 122 of the bracket 12 are conductive columns 6 passing to each support bar 123 and protruding out from two ends of the support bar 123. By the structural characteristic of the pair of first pins 121 and the pair of second pins 122 are substantially the same components with two ends, the reliability of conduction of the pair of first pins 121 and the pair of second pins 122 can be assured. Since the bracket 12 is made of non-conductive material in principle, and the pair of first pins 121 and the pair of second pins 122 must have conductive properties, the above structure can effectively improve the convenience of processing, and at the same time, the bracket 12 can have good insulation performance, while the pair of first pins 121 and the pair of second pins 122 have excellent electrical conductivity.

The pair of circuit board conductive spring plates 13 are assembled on the circuit board assembly 11 and provided for contacting the pair of first pins 121 of the bracket 12 to define conduction when the bracket 12 is pivoted to the status perpendicular to the first side 101. Specifically, the circuit board assembly 11 is provided with a through hole to facilitate assembling the pair of circuit board conductive spring plates 13, and the pair of circuit board conductive spring plates 13 are provided to let electricity to be conducted from the plug assembly 2 to the major components of the circuit board assembly 11 depending on the assembling and application requirements. The pair of circuit board conductive spring plates 13 may further be provided with a hook structure A, so as to firmly assemble the circuit board conductive spring plates 13 to the circuit board assembly 11, and to form a contact section B with elastic force relative to the pair of first pins 121 in order to provide a reverse force when it is in contact with the pair of first pins 121 and enhance the contact certainty with the pair of first pins 121. It can also be said that the contact section B is a structure that can elastically swing at the through hole of the circuit board assembly 11.

The plug assembly 2 is assembled on the assembling part 102, and the plug assembly 2 is parallel to the first side 101 or perpendicular to the first side 101 in response to the pivoting of the bracket 12. The plug assembly 2 includes an inner cover 20, a pair of conductive adapter plates 21, a pair of conductive fasteners 22 and a plug structure 23.

The inner cover 20 covers the assembling part 102 and a first slot 201. The pair of conductive adapter plates 21 are symmetrically arranged on a side of the inner cover 20 and each of them has a clamping part 211. The pair of conductive fasteners 22 are arranged corresponding to the pair of conductive adapter plates 21, one end of the pair of conductive fasteners 22 is passed through the pair of conductive adapter plates 21 and the inner cover 20 and is combined and fixed with the pair of second pins 122, and the other end is in contact with the pair of conductive adapter plates 21. The pair of conductive fasteners 22 can enhance the contact stability between the pair of second pins 122 of the bracket 12 and the pair of conductive adapter plates 21, thereby maintaining a good contact state for the entire conductive path. The inner cover 20 can prevent the pair of conductive adapter plates 21 from being exposed when the plug assembly 2 is pivoted to the status parallel to the first side 101, thereby preventing children from accidentally touching the plates and causing electric shock, so as to effectively improve product safety. The plug structure 23 includes an outer cover 231 and a plug-in part 232. The outer cover 231 is covered on the inner cover 20 and has a second slot 2311 corresponding to the first slot 201. The plug-in part 232 is passed from the inner part of the outer cover 231 to the outer part of the outer cover 231. The end of the plug-in part 232 located in the outer cover 231 has a pair of third pins 2321. The pair of third pins 2321 pass through the clamping part 211 and are respectively clamped and fixed by the clamping part 211. The clamping parts 211 can produce a tight clamping effect when the pair of third pins 2321 is inserted into the assembly, so that the pair of third pins 2321 is not easy to be withdrawn or popped out of the clamping parts 211, thereby ensuring that the plug-in part 232 and the conductive adapter plates 21 maintain good contact condition. The plug assembly 2 is a component provided for connecting with the socket, and transmitting the electricity obtained from the socket to the circuit board assembly 11 through the third pin 2321 of the plug-in part 232, the pair of conductive adapter plates 21, the pair of second pins 122, the pair of first pins 121 and the pair of circuit board conductive spring plates 13, and then the charging port 111 of the circuit board assembly 11 supplies electricity to the electronic device to achieve the purpose of charging. The part of the plug-in part 232 that passes through the outer cover 231 can be a type of pin that meets the European specifications Type C or Type F; the American standard Type A or Type B; the British standard Type G, etc. according to the use requirements of the foldable charger 9, so as to meet the voltage, frequency and safety requirements of different countries or places.

In summary, the foldable charger 9 can achieve the effect of accommodating the plug assembly 2 without the need of reserving space in the charger body, thereby effectively keeping the overall volume of the foldable charger 9 small and light. Through the bracket 12 and the assembling part 102, the plug assembly 2 can be pivoted to the status perpendicular to the first side 101 for easy use, or pivoted to a status parallel to the first side 101 for folding and storage, so as to provide the advantage of the charger being easy to carry and use. In addition, the bracket 12, the pair of circuit board conductive spring plates 13, the pair of conductive adapter plates 21 and the pair of conductive fasteners 22 can form a conductive path with a very stable contact state, which can effectively avoid the poor contact caused by the loosening and displacement of components due to the operation of pivoting the bracket 12 and the plug assembly 2, thereby greatly improving the reliability of the charger.

In a preferred implementation mode, the foldable charger 9 further includes a shaft spring plate 3 and a cover plate 4, the bracket 12 has a pair of support bars 123 and a shaft 124, the pair of support bars 123 are symmetrically configured, the shaft 124 is installed between the pair of support bars 123 and perpendicular to the pair of support bars 123, the shaft 124 has a first concave guide section 1241 and a second concave guide section 1242, the first concave guide section 1241 is arranged adjacent to the second concave guide section 1242, the pair of first pins 121 and the pair of second pins 122 are located at two opposite ends of the pair of support bars 123 respectively. The cover plate 4 is arranged in the housing 10 and located on a side of the shaft 124. The shaft spring plate 3 is arranged on the cover plate 4 and located between the shaft 124 and the cover plate 4. The shaft spring plate 3 has a convex arc section 31. When the bracket 12 is pivoted to be parallel to the first side 101, the convex arc section 31 and the first concave guide section 1241 abut against each other, and when the bracket 12 is pivoted to be perpendicular to the first side 101, the convex arc section 31 and the second concave guide section 1242 abut against each other. Through the first concave guide section 1241 and the second concave guide section 1242 of the shaft 124, in combination with the convex arc section 31 of the shaft spring plate 3, the plug assembly 2 is provided with an automatic sliding to positioning mechanism effect through the convex arc section 31 and the first concave guide section 1241 or the second concave guide section 1242 when pivoting to perpendicular to the first side 101 or parallel to the first side 101, so that the user can more easily know whether it has been rotated to a suitable position for use or storage. Specifically, when the user pivots the plug assembly 2 to a status perpendicular to the first side 101, the shaft 124 rotates with its center as the center of the circle. When the shaft 124 rotates to be perpendicular to the first side 101, the convex arc section 31 can quickly slide into the second concave guide section 1242 due to the structure of the second concave guide section 1242, and the convex arc section 31 contacts and abuts against the second concave guide section 1242 to complete the positioning. The same is true when the plug assembly 2 is pivoted to a status parallel to the first side 101. When the plug assembly 2 is rotated to be parallel to the first side 101, the convex arc section 31 can be quickly slid into the first concave guide section 1242 according to the structure of the first concave guide section 1242, and the convex arc section 31 is contacted and abutted to complete the positioning. The cover plate 4 can provide a pressing and fixing effect for the shaft spring plate 3 to prevent the shaft spring plate 3 from being loosened or offset due to the pivoting force of the plug assembly 2.

Furthermore, the cover plate 4 is screwed into the housing 10, so that the assembly firmness of the cover plate 4 and the housing 10 can be enhanced, thereby improving the ability to withstand the swing force of the shaft spring plate 3, and maintaining the stability of the overall structure.

In an implementation mode addition, each clamping part 211 of the pair of conductive adapter plates 21 has a pair of clips 2111 that are mirror-imaged, and the distance between the pair of clips 2111 is gradually reduced toward the inner cover 20. More specifically, the clamping part 211 provides a stable assembly strength relative to the pair of third pins 2321, and each clamping part 211 has the structure of the pair of clips 2111 as described above, and further the pair of clamping parts 211 can have a tapered opening corresponding to the pair of clips 2111, so that when the pair of third pins 2321 passes through the pair of clamping parts 211, the pair of clips 2111 of each clamping part 211 can produce an inverted-hook fixing effect, and it is more difficult to pop out or detach from the pair of conductive adapter plates 21, so that the components on the conductive path maintain good contact.

In order to allow the plug assembly 2 to be stably maintained in the structural status when pivoting to a status perpendicular to the first side 101 and to avoid the plug assembly 2 automatically bending close to the first side 10 due to accidental collision, the assembling part 102 may have at least one rib 1022, the inner cover 20 may have at least one positioning hole 202, and when the plug assembly 2 is pivoted to the status perpendicular to the first side 101 in response to the pivoting of the bracket 12, the rib 1022 and the positioning hole 202 are mutually locked and fixed. In this way, the plug assembly 2 can be more securely fixed in a status perpendicular to the first side 101, thereby enhancing the stability of the overall structure.

In addition, considering the assembly stability of the pair of conductive adapter plates 21 and the pair of second pins 122, the pair of conductive fasteners 22 may be a screw structure combined and fixed with the pair of second pins 122 by locking, so that the pair of conductive adapter plates 21 and the pair of second pins 122 can be in contact with each other to provide excellent electrical conduction stability.

On the other hand, in order to make the inner cover 20 and the outer cover 231 have better assembly stability and avoid the structure from being separated when the plug assembly 2 is rotated, it is preferred that the inner side of the outer cover 231 has at least one first assembly portion 2312, and the outer side of the inner cover 20 has at least one second assembly portion 203, and the outer cover 231 and the inner cover 20 are assembled and fixed through the first assembly portion 2312 and the second assembly portion 203, wherein the first assembly portion 2312 and the second assembly portion 203 are groove and protrusion structures corresponding to each other. In this way, the outer cover 231 and the inner cover 20 can have a strong structural assembly strength and stability. In this embodiment, both of the quantity of first assembly portions 2312 and the quantity of second assembly portions 203 are two, for example, the first assembly portions 2312 and the second assembly portions 203 are symmetrically arranged, and the first assembly portions 2312 are convex structures, and the second assembly portions 203 are corresponding groove structures. However, this is only a preferred structural example, and the present disclosure is not limited thereto.

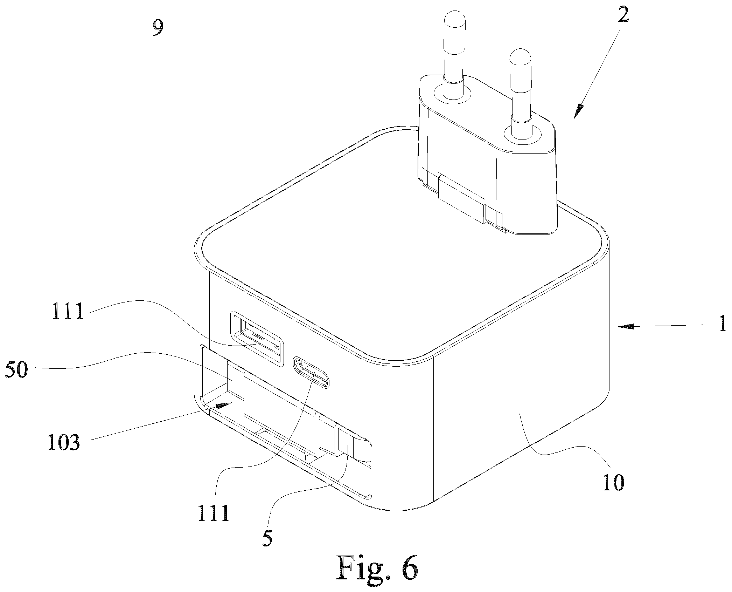

With reference to FIG. 6, which shows a schematic view of an assembly of a foldable charger in an implementation mode of a preferred embodiment of the present disclosure, the foldable charger 9 further includes a telescopic charging cable 5, and the outer side of the housing 10 is provided with an accommodating slot 103, the telescopic charging cable 5 is arranged in the housing 10 and one end is located in the housing 10 and electrically connected to the circuit board assembly 11, and another end is located outside the housing 10, provided with a charging connector 50, and accommodated in the accommodating slot 103. Therefore, this system can provide more diverse applications, allowing users to use the foldable charger 9 to charge electronic devices without using a power cable. The telescopic charging cable 5 has the advantages of being able to be quickly and easily pulled out for use, and automatically retracting when not in use, so that the end of telescopic charging cable 5 having the charging connector 50 can be stored in the accommodating slot 103. Preferably, the telescopic charging cable 5 may be designed with a stress relief structure to relieve the stress between the charging connector 50 and the wire to avoid damages to the wire caused by bending or pulling. In addition, the charging connector 50 may also be selected from USB-A, Mini USB, Micro USB, USB Type-C or Lighting specifications or a combination thereof to meet the charging requirements of various electronic devices. FIG. 6 also shows that there are two charging ports 111 of different specifications. One of the charging ports is of USB Type-C, and the other charging port 111 is of USB-A. In terms of storage and fixing, the telescopic charging cable 5 can be stored and fixed in the accommodating slot 103 by magnetic attraction, or the width of the accommodating slot 103 can be adjusted to clamp and fix the telescopic charging cable 5 for storage, etc.

In summary, through a novel mechanism design, the foldable charger of the present disclosure allows the plug assembly to pivot to the status parallel or perpendicular to the first side without being buried in the charger body, thereby maintaining the advantages of being light, thin, short and compact, and providing users with the effect of being easy to carry and use. At the same time, the foldable charger also has good electrical conduction stability. Through the structural design of the conductive adapter plate, the pair of third pins and the pair of second pins of the bracket form a stable assembly contact, and the pair of first pins can contact the pair of circuit board conductive spring plates when the plug assembly pivots to the status perpendicular to the first side, thereby constructing a complete conductive path from the plug-in part to the circuit board assembly, effectively eliminating the problem of poor contact in existing chargers. Furthermore, the present disclosure also proposes many additional detailed technical features, for example, in order to allow the plug assembly to have a positioning effect when pivoting, the foldable charger is realized through the matching of the shaft spring plate, the cover plate and the bracket of the shaft. The cover plate can be assembled by locking screws to enhance the ability to withstand the rebound force of the shaft spring plate. In order to enhance the structure of the plug assembly to be more stable and less likely to move when it is used vertically on the first side, the assembling part can be provided with the rib to engage with the positioning hole of the inner cover. In addition, in order to enhance the combination stability of each component and the pair of conductive adapter plates, the clamping parts may be provided with the pair of clips respectively having mirror settings and the spacing gradually decreasing toward the inner cover, so as to produce an inverted-hook clamping and fixing effect relative to the pair of third pins; or the pair of conductive fasteners may be screws, etc. In addition, considering the process convenience and electrical conductivity, the pair of first pins and the pair of second pins can be located at the two ends of the conductive column passing through the pair of support bars. Considering the applicability, the foldable charger can further include the telescopic charging cable stored in the accommodating slot outside the housing to provide diversified charging methods. Lastly, the specification of the charging port or the charging connector can be selected from USB-A, Mini USB, Micro USB, USB Type-C or Lighting to meet the charging requirements of most electronic devices.

## Claims

1. A foldable charger, **characterized in that**:
the foldable charger comprising:
a charger body (1), comprising:
a housing (10) having a first side (101) and an assembling part (102), the assembling part (102) being arranged on the first side (101) and having a mounting hole (1021) communicating with an inside of the housing (10);
a circuit board assembly (11) installed in the housing (10) and having at least one charging port (111) exposed from a surface of the housing (10);
a bracket (12) pivotally installed to the assembling part (102) and having an end disposed in the housing (10) and another end passing through the mounting hole (1021) and protruding out from the assembling part (102), the bracket (12) capable of being pivoted relative to the assembling part (102) to be parallel to the first side (101) or perpendicular to the first side (101), the end having a pair of first pins (121), and the other end having a pair of second pins (122); and
a pair of circuit board conductive spring plates (13) assembled to the circuit board assembly (11) and provided for contacting the pair of first pins (121) of the bracket (12) for electrical conduction when the bracket (12) pivots to be perpendicular to the first side (101); and
a plug assembly (2) assembled to the assembling part (102) and defining a status of the plug assembly (2) being parallel to the first side (101) or perpendicular to the first side (101) in response to the pivoting of the bracket (12), and the plug assembly (2) comprising:
an inner cover (20) covering the assembling part (102) and having a first slot (201);
a pair of conductive adapter plates (21) symmetrically installed to a side of the inner cover (20) and, respectively, having a clamping part (211);
a pair of conductive fasteners (22) arranged to be corresponding to the pair of conductive adapter plates (21), an end of the pair of conductive fasteners (22) passing through the pair of conductive adapter plates (21) and the inner cover (20) and fixed to the pair of second pins (122), and another end of the pair of conductive fasteners (22) abutting against the pair of conductive adapter plates (21); and
a plug structure (23) comprising an outer cover (231) and a plug-in part (232), the outer cover (231) covering the inner cover (20) and having a second slot (2311) corresponding to the first slot (201), the plug-in part (232) passing from an inside of the outer cover (231) to an outside of the outer cover (231), and an end of the plug-in part (232), located in the outer cover (231), having a pair of third pins (2321), and the pair of third pins (2321) passing through the pair of clamping parts (211) and being clamped and fixed by the pair of clamping parts (211).

2. The foldable charger according to claim 1, further comprising:
a shaft spring plate (3) and a cover plate (4),
wherein the bracket (12) further has a pair of support bars (123) and a shaft (124), the pair of support bars (123) being symmetrically arranged, the shaft (124) being arranged between the pair of support bars (123) and perpendicular to the pair of support bars (123), the shaft (124) having a first concave guide section (1241) and a second concave guide section (1242), the first concave guide section (1241) being located adjacent to the second concave guide section (1242), the pair of first pins (121) and the pair of second pins (122) being located at two opposite ends of the pair of support bars (123), respectively,
the cover plate (4) being assembled to the inside of the housing (10) and disposed on a side of the shaft (124), the shaft spring plate (3) being installed to the cover plate (4) and disposed between the shaft (124) and the cover plate (4), the shaft spring plate (3) having a convex arc section (31),
when the bracket (12) is pivoted to be parallel to the first side (101), the convex arc section (31) and the first concave guide section (1241) abut against each other, and
when the bracket (12) is pivoted to be perpendicular to the first side (101), the convex arc section (31) and the second concave guide section (1242) abut against each other.

3. The foldable charger according to claim 2, wherein the cover plate (4) is locked into the housing (10) through a screw.

4. The foldable charger according to claim 3, wherein each clamping part (211) comprises a pair of clips (2111) with a mirrored configuration, and a distance between the pair of clips (2111) gradually decreases in a direction towards the inner cover (20).

5. The foldable charger according to claim 4, wherein the assembling part (102) is provided with at least one rib (1022), the inner cover (20) is provided with at least one positioning hole (202), and, when the plug assembly (2) defines the status of the plug assembly (2) to be perpendicular to the first side (101) in correspondence with the pivoting of the bracket (12), the at least one rib (1022) and the at least one positioning hole (202) are engaged and fixed to each other.

6. The foldable charger according to claim 5, wherein the pair of conductive fasteners (22) are screws for assembling and fixing the pair of second pins (122) by means of a locking method.

7. The foldable charger according to claim 6, wherein an inner side of the outer cover (231) is provided with at least one first assembly portion (2312), an outer side of the inner cover (20) is provided with at least one second assembly portion (203), the outer cover (231) and the inner cover (20) are assembled and fixed by the at least one first assembly portion (2312) and the at least one second assembly portion (203), and the at least one first assembly portion (2312) and the at least one second assembly portion (203) are a groove structure and a bump structure, respectively.

8. The foldable charger according to any one of claims 1 to 7, further comprising:
a telescopic charging cable (5),
wherein an outer side of the housing (10) is provided with an accommodating slot (103), the telescopic charging cable (5) is installed to the housing (10) and has an end located inside the housing (10) and electrically coupled to the circuit board assembly (11) and another end located outside the housing (10) and having a charging connector (50), and the charging connector (50) is provided for being accommodated in the accommodating slot (103).

9. The foldable charger according to claim 8, wherein the at least one charging port (111) and the charging connector (50) are of a specification selected from the group of USB-A, Mini USB, Micro USB, USB Type-C and Lighting, or a combination thereof.

10. The foldable charger according to any one of claims 1 to 7, wherein the at least one charging port (111) is of a specification selected from the group of USB-A, Mini USB, Micro USB, USB Type-C and Lighting, or a combination thereof.
